# EUROPÄISCHE PATENTSCHRIFT

(11) **EP 1 901 634 B1**
(45) Veröffentlichungstag und Bekanntmachung des Hinweises auf die Patenterteilung: **27.03.2013**
(21) Anmeldenummer: 06763004.6
(22) Anmeldetag: 07.08.2006
(51) Int. Cl.: F16F 1/02, A47C 27/06, A47C 23/00

(54) **FEDERELEMENT FÜR FEDERKERNMATRATZEN UND UNTERMATRATZEN**
SPRING ELEMENT FOR SPRING CORE MATTRESSES AND UNDER MATTRESSES
ELEMENT RESSORT POUR MATELAS A RESSORTS ET SOMMIERS

(30) Priorität: 11.08.2005 EP 05017517
(43) Veröffentlichungstag der Anmeldung: 26.03.2008
(73) Patentinhaber: Diemer & Dr. Jaspert GbR, 85630 Grasbrunn (DE)
(72) Erfinder: DIEMER, Gregor, 85456 Wartenberg (DE); JASPERT, Bodo, 85630 Grasbrunn (DE)
(74) Vertreter: Manitz, Finsterwald & Partner GbR
(86) Internationale Anmeldenummer: PCT/EP2006/007802
(87) Internationale Veröffentlichungsnummer: WO 2007/017232

(56) Entgegenhaltungen:
- EP-A- 1 302 135
- DE-A1- 10 007 296
- DE-B- 1 066 057
- DE-U1-202004 017 617

## Beschreibung

Die vorliegende Erfindung betrifft ein Federelement für Federkernmatratzen und, insbesondere Einzelstützelemente aufweisende, Untermatratzen mit einer Bodenplatte und einer Dechplatte und einem dazwischen angeordneten, insbesondere elastisch verformbare Federarme aufweisenden Federkörper aus Kunststoff.

Federkernmatratzen werden bisher meist mit Metallfedern ausgerüstet. Diese haben jedoch Nachteile, insbesondere besteht Verletzungsgefahr bei einer Zerstörung der Matratze. Es wird daher versucht, Kunststofffedern in Federkernmatratzen einzusetzen. Diese sind jedoch hinsichtlich ihrer Materialeigenschaften problematisch. Insbesondere weisen sie einen höheren Setzbetrag bzw. Höhenverlust auf als Metallfedern. Auch kann die Federhärte im Laufe der Zeit abnehmen.

Aus der DE 20 2004 017 617 U1 ist ein Federelement bekannt, bei welchem der Federteller aus einem härteren Kunststoff besteht als der Federkörper.

Der Erfindung liegt die Aufgabe zugrunde, ein Federelement der eingangs genannten Art mit verbesserten Eigenschaften anzugeben, insbesondere sollen der Setzbetrag bzw. Höhenverlust und die Federhärtenabnahme verringert werden.

Diese Aufgabe wird dadurch gelöst, dass der Federkörper zwei Kunststoffe unterschiedlicher Härte aufweist, wobei der härtere Kunststoff in Bereichen geringer Dehnung und der weichere Kunststoff in Bereichen großer Dehnung vorgesehen ist.

Durch die Anteile an hartem Kunststoff im Federelement kann mit verhältnismäßig wenig Material eine hohe Federhärte erreicht werden. Dabei wird durch die Anordnung des harten Kunststoffs in Bereichen geringer Dehnung verhindert, dass dessen Härte durch zu starke Dehnung im Laufe der Zeit zu stark abnimmt. Die Streckgrenze liegt nämlich bei harten Kunststoffen niedriger, so dass es bereits bei geringerer Dehnung zu plastischer Verformung mit Veränderung der Federeigenschaften kommen kann. Durch die Verwendung von weichem Kunststoff in den Bereichen großer Dehnung tritt dieses Problem nicht oder nur in verringertem Maße auf, da weiche Kunststoffe eine deutlich höhere Streckgrenze aufweisen. Andererseits tragen die verwendeten Anteile an weichem Kunststoff ebenfalls zur Gesamtfederhärte des Federelementes bei, so dass durch die Kombination insgesamt ein Federelement geschaffen wird, welches mit geringem Materialeinsatz eine gewünschte hohe Federhärte aufweist und gute Dauergebrauchseigenschaften zeigt.

Härterer Kunststoff kann erfindungsgemäß insbesondere im Bereich der so genannten neutralen Faser vorgesehen sein. Dies sind grundsätzlich die innen liegenden Bereiche des Federelements, aber natürlich auch die Bereiche, die aufgrund der Geometrie des Federelements keine oder nur eine sehr geringe Biegung erfahren.

Der weichere Kunststoff ist dagegen bevorzugt in außen liegenden Bereichen des Federelements vorgesehen. Dort tritt die größte Dehnung auf, so dass die Streckgrenze von härterem Kunststoff früher überschritten würde.

Härterer Kunststoff kann andererseits aber auch in Bereichen mit Stauchung eingesetzt werden, da die Gefahr plastischer Verformung in Stauchungsbereichen im Vergleich zu Dehnungsbereichen gering ist. Die Verteilung kann also insbesondere so aussehen, dass härterer Kunststoff im Bereich der neutralen Faser und in Stauchungsbereichen, weicherer Kunststoff dagegen in Bereichen mit Dehnung vorgesehen ist.

Nach einer weiteren Ausgestaltung der Erfindung kann härterer Kunststoff auch in Einspannbereichen und/oder Wendepunkten von Federarmen vorgesehen sein. Auch in diesen Bereichen tritt nur eine geringe Dehnung auf, so dass die Streckgrenze von härterem Kunststoff nicht oder sehr viel später erreicht wird.

Die Verteilung von härterem und weicherem Material kann insbesondere auch in Abhängigkeit von einem gewünschten Biegeverhalten gewählt sein. Dabei wird die Verteilung vorzugsweise in Abhängigkeit von der jeweiligen Verformungsgrenze gewählt. Die Federeigenschaften des Federelements können damit weiter verbessert werden.

Als Kunststoffmaterial kommt insbesondere Polyester in Betracht. Polyester weist für die Herstellung von Federelementen vorteilhafte Eigenschaften auf.

Anstatt zwei Kunststoffe mit unterschiedlicher Härte können auch drei oder mehr Kunststoffe mit unterschiedlicher Härte verwendet werden. Hier wie bei der Verwendung von zwei verschiedenen Kunststoffen kann natürlich grundsätzlich der gleiche Kunststofftyp, beispielsweise Polyester, verwendet werden. Die unterschiedliche Härte wird dann durch die weiteren Inhaltsstoffe bestimmt.

Zur Herstellung des erfindungsgemäßen Federelements kann ein Spritzgießverfahren verwendet werden. Das härtere Material kann dabei insbesondere mit weicherem Material umspritzt werden. Hiermit können gute Ergebnisse erzielt werden.

Bei der Verwendung von drei oder mehr Kunststoffen unterschiedlicher Härte kann die Herstellung insbesondere durch ein Injektionsverfahren erfolgen, bei welchem ein oder mehr Kunststoffe in die Spritzgießvorrichtung zusätzlich eingespritzt werden.

Das erfindungsgemäße Federelement kann insbesondere für Federkerne von Federkernmatratzen, für Einzelstützelemente von Untermatratzen sowie für Randlager von Untermatratzen mit herkömmlichen Querlatten eingesetzt werden.

Das Federelement kann auch mindestens eine angeformte Stütz- oder Halteplatte aufweisen. Diese ist dann aus dem härteren Kunststoff gebildet. Bei der Stütz- oder Halteplatte kann es sich um die Bodenplatte oder die Deckplatte eines Einzelstützelementes handeln, wobei die Deckplatte selbst als Tragplatte für eine Untermatratze ausgebildet sein kann oder als Befestigungselement für eine solche Tragplatte.

Ein erfindungsgemäßes Federelement mit Stütz- oder Halteplatte kann insbesondere durch das oben beschriebene Injektionsverfahren hergestellt werden. Die Eigenschaften der verwendeten Kunststoffe werden dabei so gewählt, dass der als erstes eingespritzte Kunststoff sich in der Form durch den Formteil für die Federstreben und gerade bis vor den Formteil für die Stütz- oder Halteplatte ausdehnt und dass der danach eingespritzte zweite Kunststoff diesen ersten Kunststoff durchdringt und nach dem Austreten aus diesem den Formteil für die Stütz- oder Halteplatte ausfüllt. Es kann dadurch eine klare Trennung zwischen Federstreben und Stütz- oder Halteplatte erreicht werden.

Nach einer bevorzugten Ausgestaltung der Erfindung weisen die unterschiedlichen Kunststoffe untereinander verschiedene Farben auf. Dadurch kann ein optisch ansprechender Eindruck des Federelementes erzielt werden, wobei durch die Farbgebung die technische Besonderheit der Herstellung des Federelementes aus zwei verschiedenen Kunststoffen hervorgehoben werden kann.

Die Härtenverhältnisse zwischen weichem und hartem Material liegen bevorzugt zwischen 1:1,5 und 1:200, insbesondere zwischen 1:2 und 1:8. Diese Werte haben sich als vorteilhaft herausgestellt.

Ausführungsbeispiele der Erfindung sind in den Zeichnungen dargestellt und werden nachfolgend beschrieben. Es zeigen, jeweils in schematischer Darstellung:
- Fig. 1: ein einfaches, nicht erfindungsgemäßes Federelement,
- Fig. 2: das Federelement von Fig. 1 in komprimiertem Zustand,
- Fig. 3: eine Seitenansicht eines erfindungsgemäßen Federelements mit angeformter Deckplatte als Befestigungselement für eine Tragplatte,
- Fig. 4: noch ein erfindungsgemäßes Federelement mit einer angeformten Deckplatte als Tragplatte.

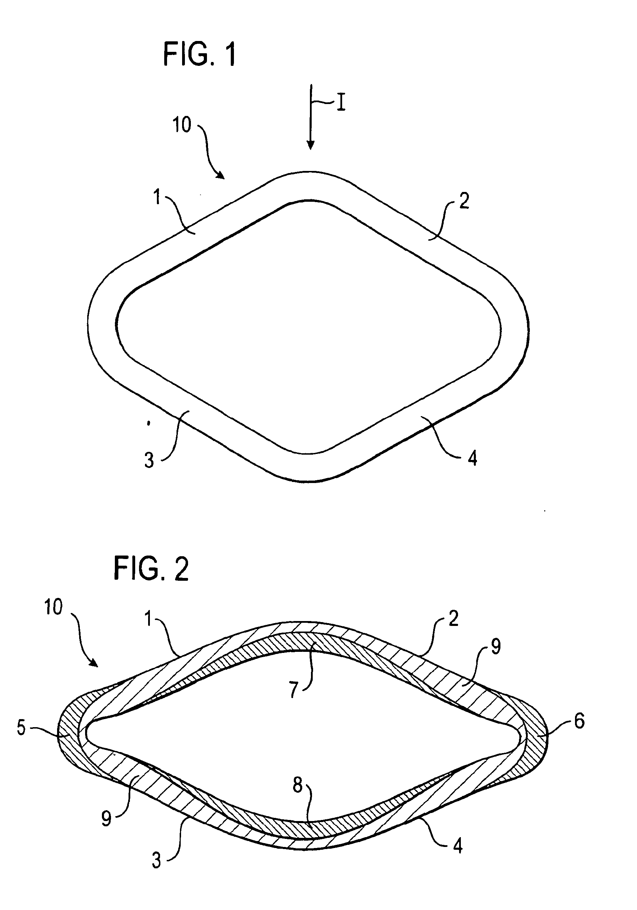

Das in Fig. 1 dargestellte Federelement weist vier Federarme 1, 2, 3 und 4 auf, die zur Bildung eines Federkörpers 10 in Art einer Raute endseitig miteinander verbunden sind. Im Verbindungsbereich der beiden oberen Federarme 1, 2 kann eine Deckplatte, im Verbindungsbereich der beiden unteren Federarme 3, 4 eine Bodenplatte angeordnet sein. Durch Druck auf eine solche Deckplatte bzw. den Verbindungsbereich zwischen den beiden Federarmen 1 und 2 in Richtung von Pfeil I kann das Federelement komprimiert werden.

Fig. 2 zeigt ein solchermaßen komprimiertes Federelement mit Federarmen 1, 2, 3 und 4. In dieser Darstellung sind die Bereiche mit weichem Kunststoffmaterial einerseits und hartem Kunststoffmaterial andererseits durch unterschiedliche Schraffur kenntlich gemacht. Weiches Kunststoffmaterial ist mit engerer, hartes Kunststoffmaterial mit weiterer Schraffur gekennzeichnet.

Wie man sieht, ist weiches Kunststoffmaterial in den äußeren Verbindungsbereichen 5, 6 der beiden in Fig. 1 und 2 linken Federarme 1, 3 einerseits und der beiden rechten Federarme 2, 4 andererseits angeordnet. Diese Bereiche unterliegen bei der Kompression des Federelements einer relativ starken Dehnung. Darüber hinaus ist weiches Kunststoffmaterial im unteren Bereich 7 der beiden oberen Federarme 1, 2 und im oberen Bereich 8 der beiden unteren Federarme 3, 4 angeordnet. Auch diese Bereiche 7, 8 unterliegen bei Kompression des Federelements einer relativ starken Dehnung.

Hartes Kunststoffmaterial ist dagegen in den übrigen Bereichen 9 angeordnet. Hier tritt eine vergleichsweise geringe Dehnung bzw. nur eine Stauchung auf. Bei einer Kompression des Federelements wird hier daher nicht die Streckgrenze des harten Kunststoffmaterials erreicht, so dass eine plastische Verformung weitgehend ausgeschlossen werden kann. Dies hat den Vorteil, dass einerseits durch die Verwendung von hartem Kunststoffmaterial eine hohe Federhärte eingestellt und andererseits durch die Anordnung des härteren Kunststoffmaterials nur in den Bereichen 9 geringer Dehnung eine gute Dauerhaltbarkeit gewährleistet werden kann. In entsprechender Weise können auch drei oder mehr Kunststoffe unterschiedlicher Härte verwendet werden, wobei die Verteilung der unterschiedlichen Kunststoffe so gewählt ist, dass der weichste Kunststoff in den Bereichen größter Dehnung und der härteste Kunststoff in den Bereichen geringster Dehnung bzw. ausschließlicher Stauchung angeordnet ist. Die Übergänge zwischen den verschiedenen Kunststoffen können jeweils auch fließend gewählt sein.

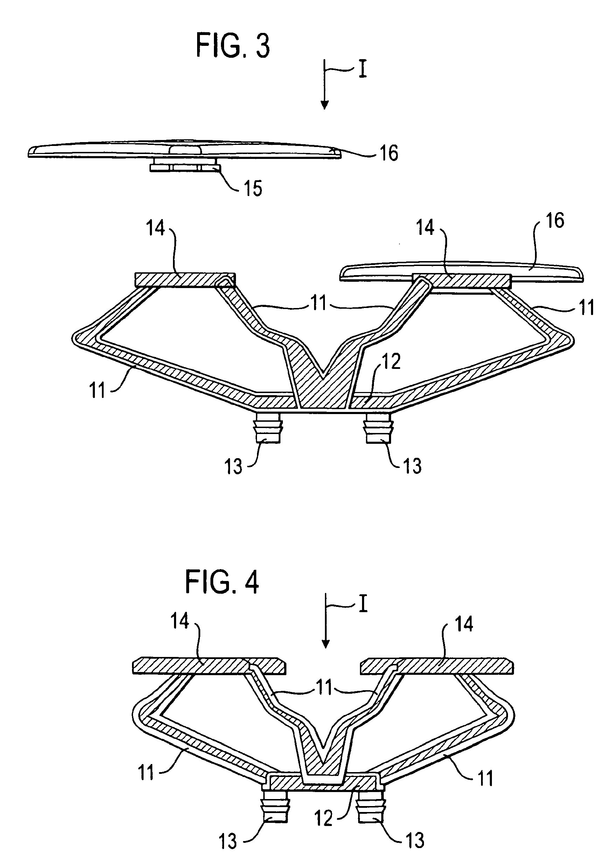

Das in Fig. 3 dargestellte Federelement umfasst Federarme 11, eine Bodenplatte 12 mit Befestigungsdübeln 13 und Deckplatten 14. Das Federelement ist rotationssymmetrisch um die Federachse ausgebildet und umfasst insgesamt vier Deckplatten 14. Wie man erkennt, sind die Deckplatten 14 und die Bodenplatte 12 mit Dübeln 13 an die Federarme 11 angeformt. Dabei bestehen die Deckplatten 14 und die Bodenplatte 12 mit Dübeln 13 aus härterem Kunststoff, während bei den Federarmen 11 nur die so genannte neutrale Faser im Inneren der Federarme 11 aus diesem härteren Kunststoff besteht. Die darum angeordneten äußeren Bereiche der Federarme 11 bestehen dagegen aus einem weicheren Kunststoff.

Die Deckplatten 14 sind jeweils mit einer zentralen Öffnung ausgebildet, in welche der Fuß 15 einer Tragplatte 16 einsetzbar ist. Der Fuß 15 und die Öffnung in der Deckplatte 14 sind dabei in der Art eines Bajonettverschlusses ausgebildet. Fig. 3 zeigt in der rechten Hälfte eine in die Öffnung der Deckplatte 14 eingesetzte Tragplatte 16 und in der linken Hälfte eine hiervon gelöste Tragplatte 16.

Bei dem in Fig. 4 dargestellten Federelement sind an die Federarme 11 ebenfalls eine Bodenplatte 12 mit Dübeln 13 sowie vier Deckplatten 14 angeformt. Die Deckplatten 14 sind hier allerdings größer und bilden selbst Tragplatten für eine Matratze oder dergleichen. Auch hier sind die Deckplatten 14, die Bodenplatte 12 mit Dübeln 13 und die neutrale Faser der Federarme 11 aus härterem Kunststoffmaterial, die außen liegenden Bereiche der Federarme 11 dagegen aus weicherem Kunststoffmaterial hergestellt.

### Bezugszeichenliste

- 1: Federarm
- 2: Federarm
- 3: Federarm
- 4: Federarm
- 5: Bereich
- 6: Bereich
- 7: Bereich
- 8: Bereich
- 9: Bereich
- 10: Federkörper
- 11: Federarm
- 12: Bodenplatte
- 13: Dübel
- 14: Deckplatte
- 15: Fuß
- 16: Tragplatte
- I: Kompressionsrichtung

## Patentansprüche

1. Federelement für Federkernmatratzen und, insbesondere Einzelstützelemente aufweisende, Untermatratzen mit einer Bodenplatte (12) und einer Deckplatte (14) und einem dazwischen angeordneten, insbesondere elastisch verformbare Federarme (1, 2, 3, 4; 11) aufweisenden Federkörper (10) aus Kunststoff,
**dadurch gekennzeichnet, dass**
der Federkörper (10) zwei Kunststoffe unterschiedlicher Härte aufweist, wobei der härtere Kunststoff in Bereichen (9) geringer Dehnung und der weichere Kunststoff in Bereichen großer Dehnung (5, 6, 7, 8) vorgesehen ist.

2. Federelement nach Anspruch 1,
**dadurch gekennzeichnet, dass**
härterer Kunststoff im Bereich der so genannten neutralen Faser vorgesehen ist.

3. Federelement nach Anspruch 1 oder 2,
**dadurch gekennzeichnet, dass**
weicherer Kunststoff in außen liegenden Bereichen des Federelements vorgesehen ist.

4. Federelement nach einem der vorhergehenden Ansprüchen,
**dadurch gekennzeichnet, dass**
härterer Kunststoff in Bereichen mit Stauchung und weicherer Kunststoff in Bereichen mit Dehnung vorgesehen ist.

5. Federelement nach einem der vorhergehenden Ansprüchen,
**dadurch gekennzeichnet, dass**
härterer Kunststoff in Einspannbereichen und/oder Wendepunkten von Federarmen (1, 2, 3, 4) vorgesehen ist.

6. Federelement nach einem der vorhergehenden Ansprüchen,
**dadurch gekennzeichnet, dass**
der Federkörper (10) durch Spritzgießen hergestellt ist.

7. Federelement nach Anspruch 6,
**dadurch gekennzeichnet, dass**
das härtere Material mit weicherem Material umspritzt ist.

8. Federelement nach einem der vorhergehenden Ansprüchen,
**dadurch gekennzeichnet, dass**
die Verteilung von härterem und weicherem Material in Abhängigkeit von einem gewünschten Biegeverhalten gewählt ist.

9. Federelement nach einem der vorhergehenden Ansprüchen,
**dadurch gekennzeichnet, dass**
die Verteilung in Abhängigkeit von der jeweiligen Verformungsgrenze des Materials gewählt ist.

10. Federelement nach einem der vorhergehenden Ansprüchen,
**dadurch gekennzeichnet, dass**
als Kunststoffmaterial Polyester verwendet ist.

11. Federelement nach einem der vorhergehenden Ansprüchen,
**dadurch gekennzeichnet, dass**
drei oder mehr Kunststoffe unterschiedlicher Härte vorgesehen sind.

12. Federelement nach einem der vorhergehenden Ansprüchen,
**dadurch gekennzeichnet, dass**
der Federkörper (10) im Injektionsverfahren hergestellt ist.

13. Federelement nach einem der vorhergehenden Ansprüche,
**dadurch gekennzeichnet, dass**
das Federelement mindestens eine an die Federarme (11) angeformte Stütz- oder Halteplatte, insbesondere Boden- oder Deckplatte (12, 14), aufweist und dass diese aus härterem Kunststoff gebildet ist.

14. Federelement nach einem der vorhergehenden Ansprüche,
**dadurch gekennzeichnet, dass**
die unterschiedlichen Kunststoffe untereinander verschiedene Farben aufweisen.

15. Federelement nach einem der vorhergehenden Ansprüche,
**dadurch gekennzeichnet, dass**
die Härtenverhältnisse zwischen weichem und hartem Material zwischen 1:1,5 und 1:200, insbesondere zwischen 1:2 und 1:8 liegen.

## Claims

1. A spring element for innerspring mattresses and for undermattresses, said undermattresses in particular having single support elements, the spring element having a base plate (12) and a top plate (14) and a spring body (10) of plastic arranged therebetween and in particular having elastically deformable spring arms (1, 2, 3, 4, 11),
**characterised in that**
the spring body (10) has two plastics of different hardness, wherein the harder plastic is provided in regions (9) of low stretch and the softer plastic is provided in regions of high stretch (5, 6, 7, 8).

2. A spring element in accordance with claim 1,
**characterised in that**
harder plastic is provided in the region of the so-called neutral fibre.

3. A spring element in accordance with claim 1 or claim 2,
**characterised in that**
softer plastic is provided in outwardly disposed regions of the spring element.

4. A spring element in accordance with any one of the preceding claims,
**characterised in that**
harder plastic is provided in regions with compression and softer plastic is provided in regions with stretch.

5. A spring element in accordance with any one of the preceding claims,
**characterised in that**
harder plastic is provided in clamping regions and/or turning points of spring arms (1, 2, 3, 4).

6. A spring element in accordance with any one of the preceding claims,
**characterised in that**
the spring body (10) is manufactured by injection moulding.

7. A spring element in accordance with claim 6,
**characterised in that**
the harder material is overmoulded with softer material.

8. A spring element in accordance with any one of the preceding claims,
**characterised in that**
the distribution of harder and softer material is selected in dependence on a desired bending behaviour.

9. A spring element in accordance with any one of the preceding claims,
**characterised in that**
the distribution is selected in dependence on the respective deformation limit of the material.

10. A spring element in accordance with any one of the preceding claims,
**characterised in that**
polyester is used as the plastic material.

11. A spring element in accordance with any one of the preceding claims,
**characterised in that**
three or more plastics of different hardness are provided.

12. A spring element in accordance with any one of the preceding claims,
**characterised in that**
the spring body (10) is manufactured in an injection process.

13. A spring element in accordance with any one of the preceding claims,
**characterised in that**
the spring element has at least one support plate or holding plate, in particular a base plate or top plate (12, 14) moulded to the spring arms (11); and **in that** they are formed from harder plastic.

14. A spring element in accordance with any one of the preceding claims,
**characterised in that**
the different plastics have different colours among one another.

15. A spring element in accordance with any one of the preceding claims,
**characterised in that**
the hardness ratios between soft and hard material lie between 1:1.5 and 1: 200, in particular between 1:2 and 1:8.

## Revendications

1. Élément de ressort pour matelas à ressort et pour des sommiers, en particulier comprenant des éléments de soutien individuels, avec une plaque inférieure (12) et une plaque supérieure (14) et un corps de ressort (10) en matière plastique agencé entre ces plaques et en particulier présentant des bras de ressort (1, 2, 3, 4 ; 14) élastiquement déformables,
**caractérisé en ce que** le corps de ressort (10) comprend deux matières plastiques de dureté différente, telles que la matière plastique plus dure est prévue dans des zones (9) à plus faible allongement, et la matière plastique plus souple est prévue dans des zones à plus fort allongement (5, 6, 7, 8).

2. Élément de ressort selon la revendication 1,
**caractérisé en ce que** la matière plastique plus dure est prévue dans la région de la fibre dite neutre.

3. Élément de ressort selon la revendication 1 ou 2,
**caractérisé en ce que** la matière plastique plus tendre est prévue dans des zones de l'élément de ressort situées à l'extérieur.

4. Élément de ressort selon l'une des revendications précédentes,
**caractérisé en ce que** la matière plastique plus dure est prévue dans des zones en écrasement et la matière plastique plus tendre est prévue dans des zones en allongement.

5. Élément de ressort selon l'une des revendications précédentes,
**caractérisé en ce que** la matière plastique plus dure est prévue dans les zones de prise et/ou au niveau des points de rebroussement des bras de ressort (1, 2, 3, 4).

6. Élément de ressort selon l'une des revendications précédentes,
**caractérisé en ce que** le corps de ressort (10) est fabriqué par moulage par injection.

7. Élément de ressort selon la revendication 6,
**caractérisé en ce que** la matière plus dure est enrobée avec la matière plus souple.

8. Élément de ressort selon l'une des revendications précédentes,
**caractérisé en ce que** la répartition de la matière plus dure est de la matière plus souple est choisie en fonction d'un comportement de flexion souhaité.

9. Élément de ressort selon l'une des revendications précédentes,
**caractérisé en ce que** la répartition est choisie en fonction de la limite de déformation respective de la matière.

10. Élément de ressort selon l'une des revendications précédentes,
**caractérisé en ce que** l'on utilise du polyester à titre de matière plastique.

11. Élément de ressort selon l'une des revendications précédentes,
**caractérisé en ce qu'**il est prévu trois ou plusieurs matières plastiques de dureté différente.

12. Élément de ressort selon l'une des revendications précédentes,
**caractérisé en ce que** le corps de ressort (10) est fabriqué par un procédé d'injection.

13. Élément de ressort selon l'une des revendications précédentes,
**caractérisé en ce que** l'élément de ressort comprend au moins une plaque de soutien ou de maintien, conformée sur les bras de ressort (11), en particulier une plaque inférieure ou une plaque supérieure (12, 14), et **en ce que** cette plaque est formée en matière plastique plus dure.

14. Élément de ressort selon l'une des revendications précédentes,
**caractérisé en ce que** les différentes matières plastiques présentent des couleurs différentes les unes des autres.

15. Élément de ressort selon l'une des revendications précédentes,
**caractérisé en ce que** les relations de dureté entre la matière plus souple et la matière plus dure sont entre 1:1,5 et 1:200, en particulier entre 1:2 et 1:8.
